# EUROPÄISCHE PATENTSCHRIFT

(11) **EP 3 814 162 B1**
(45) Veröffentlichungstag und Bekanntmachung des Hinweises auf die Patenterteilung: **15.06.2022**
(21) Anmeldenummer: 18769963.2
(22) Anmeldetag: 07.09.2018
(51) Int. Cl.: B60K 35/00

(54) **VERFAHREN ZUM BETREIBEN EINER ANZEIGEEINRICHTUNG IN EINEM KRAFTFAHRZEUG UND ANZEIGESYSTEM FÜR EIN KRAFTFAHRZEUG**
METHOD FOR OPERATING A DISPLAY DEVICE IN A MOTOR VEHICLE AND DISPLAY SYSTEM FOR A MOTOR VEHICLE
PROCÉDÉ POUR FAIRE FONCTIONNER UN DISPOSITIF D'AFFICHAGE DANS UN VÉHICULE À MOTEUR ET SYSTÈME D'AFFICHAGE POUR UN VÉHICULE À MOTEUR

(30) Priorität: 26.06.2018 DE 102018210390
(43) Veröffentlichungstag der Anmeldung: 05.05.2021
(73) Patentinhaber: Audi AG, 85045 Ingolstadt (DE)
(72) Erfinder: KÜHNE, Marcus, 92339 Beilngries (DE)
(86) Internationale Anmeldenummer: PCT/EP2018/074167
(87) Internationale Veröffentlichungsnummer: WO 2020/001797

(56) Entgegenhaltungen:
- DE-A1-102014 220 053
- DE-A1-102015 003 948
- DE-A1-102016 120 427
- US-A1- 2015 100 179

## Beschreibung

Die Erfindung betrifft ein Verfahren zum Betreiben einer Anzeigeeinrichtung in einem Kraftfahrzeug beim Zurücklegen einer Fahrstrecke mit dem Kraftfahrzeug. Des Weiteren betrifft die Erfindung ein Anzeigesystem für ein Kraftfahrzeug zum Durchführen eines solchen Verfahrens.

Zukünftig werden sich in Kraftfahrzeugen, insbesondere aufgrund der Fortschritte im Bereich des autonomen Fahrens, mit hoher Wahrscheinlichkeit verschiedenste Unterhaltungsangebote für Fahrzeuginsassen, auch für Fahrer, von Kraftfahrzeugen zunehmend etablieren. So zeigt die DE 10 2014 220 053 A1 beispielsweise ein System und ein Verfahren zum Darstellen einer virtuellen Realität während der Fahrt mit einem Kraftfahrzeug. Es kann ein Virtual-Reality-Angelspiel angezeigt werden, sodass ein die Virtual-Reality-Brille tragender Fahrzeuginsasse während der Fahrt mit dem Kraftfahrzeug virtuell angeln gehen kann. Fährt das Kraftfahrzeug, in welchem ein Träger einer Virtual-Reality-Brille sitzt, tagsüber durch eine bergige Gegend, so können basierend auf dem Standort und der Ausrichtung des Kraftfahrzeugs ein Erscheinungsbild und ein Gelände innerhalb des Angelspiels entsprechend angepasst werden. In Kenntnis eines Standorts des Kraftfahrzeugs kann beispielsweise innerhalb des Spiels auch eine Fischart gewählt werden, welche in der Gegend, in welcher das Kraftfahrzeug gerade fährt, vorkommt. Auch können Bewegungen eines virtuellen Bootes innerhalb des Spiels beispielsweise an Fahrzeugbewegungen und/oder Bewegungen des Trägeres der Virtual-Reality-Brille angepasst werden.

Die DE 10 2010 036 666 A1 beschreibt eine intelligente Musikauswahl in Fahrzeugen. Die Musikauswahl wird beispielsweise in Abhängigkeit von einer Fahrtdauer und einem Ort angepasst, an dem ein Fahrer dieses Fahrzeugs einen Tankstop einlegt.

Die DE 10 2012 214 988 A1 zeigt ein Verfahren zum Durchführen eines Augmented-Reality-Spiels während der Fahrt mit einem Kraftfahrzeug. So kann beispielsweise ein Fahrunterrichts-Lernspiel wiedergegeben werden. Ein Fahrzeuginsasse, der das Spiel gerade spielt, kann so innerhalb des Spiels demjenigen Fahrzeug folgen, in dem er gerade sitzt.

Es ist die Aufgabe der vorliegenden Erfindung, eine Lösung bereitzustellen, mittels welcher einem Fahrzeuginsassen eine besonders realistisch anmutende und schlüssige virtuelle Unterhaltungsmöglichkeit beim Zurücklegen einer Fahrstrecke in einem Kraftfahrzeug geboten werden kann.

Diese Aufgabe wird durch ein Verfahren zum Betreiben einer Anzeigeeinrichtung in einem Kraftfahrzeug sowie durch ein Anzeigesystem mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben einer Anzeigeeinrichtung in einem Kraftfahrzeug werden beim Zurücklegen einer Fahrstrecke mit dem Kraftfahrzeug mehrere virtuelle Einzelsequenzen bereitgestellt, die mittels der Anzeigeeinrichtung wiedergegeben werden können. Bei der Anzeigeeinrichtung kann es sich beispielsweise um eine Virtual-Reality-Brille, eine Augmented-Reality-Brille, eine Mixed-Reality-Brille oder um eine in eine Fensterscheibe des Kraftfahrzeugs integrierte Anzeigeeinrichtung, insbesondere in Form einer kontaktanalogen Anzeige, handeln. Zumindest ein Teil der bereitgestellten Einzelsequenzen wird beim Zurücklegen der Fahrstrecke mit dem Kraftfahrzeug mittels der Anzeigeeinrichtung wiedergegeben, wobei eine Auswahl und Festlegung einer Wiedergabereihenfolge der Einzelsequenzen passend zu einer Charakteristik der Fahrstrecke und derart erfolgt, dass die Einzelsequenzen eine vorgegebene Eingangssequenz und Endsequenz zu einem schlüssigen virtuellen Erlebnis verbinden.

Der Erfindung liegt die Erkenntnis zugrunde, dass spätestens ab dem Einsatz autonomen Fahrens mit hoher Wahrscheinlichkeit streckenabhängige virtuelle Erlebnisse sich etablieren werden, in denen ein Fahrzeuginsasse während der Fahrt verschiedene virtuelle Erlebnisse durchleben kann. Mittels des erfindungsgemäßen Verfahrens ist es möglich, dass bestimmte Abschnitte dieses virtuellen Erlebnisses auf eine jeweilige Streckencharakteristik der betreffenden Fahrstrecke angepasst werden, sodass beispielsweise eine Actionsequenz mit vielen Richtungswechseln in einem kurvenreichen Fahrabschnitt untergebracht wird, während man zum Beispiel bei einer gleichmäßigen Autobahnfahrt oder im Stadtverkehr entsprechend andere virtuelle Erlebnisse durchlebt.

Bei dem erfindungsgemäßen Verfahren ist es nun vorgesehen, dass man eine Vielzahl von bereitgestellten virtuellen Einzelsequenzen durch eine definierte Anfangssequenz und Endsequenz einfasst und die dazwischen liegenden Einzelsequenzen dynamisch an die Charakteristik der Fahrstrecke anpasst. Das heißt, mittels der Eingangssequenz und Ausgangssequenz wird eine in sich schlüssige Story aufgebaut, wobei die Einzelsequenzen die Eingangssequenz und Endsequenz zu einem schlüssigen Erlebnis miteinander verbinden.

Die Auswahl der Einzelsequenzen erfolgt erfindungsgemäß also gemäß der Charakteristik der Fahrstrecke. Die Charakteristik der Fahrstrecke kann beispielsweise durch ihr Höhenprofil, durch ihr Kurvenprofil, durch eine jeweilige Art zurückzulegender beziehungsweise zu befahrender Straßentypen, der Dauer der Fahrtstrecke und dergleichen beschrieben werden. Dadurch, dass die Einzelsequenzen passend zur Charakteristik der Fahrstrecke und somit zur jeweiligen Charakteristik einzelner Streckenabschnitte der Fahrstrecke ausgewählt und wiedergegeben werden, ergibt sich ein besonders realistisch anmutendes virtuelles Erlebnis für den Fahrzeuginsassen, der die Anzeigeeinrichtung betrachtet. Die Wiedergabereihenfolge der ausgewählten Einzelsequenzen wird dabei derart vorgegeben, dass die nacheinander mittels der Anzeigeeinrichtung wiedergegebenen Einzelsequenzen eine schlüssige Story ergeben, welche die vorgegebene Eingangssequenz und Endsequenz schlüssig miteinander verbinden.

Der Fahrzeuginsasse erlebt also beim Zurücklegen der Fahrstrecke mit dem Kraftfahrzeug eine Aneinanderreihung von virtuellen Einzelsequenzen, die eingerahmt durch die Eingangssequenz und die Endsequenz eine schlüssige Story ergeben. Die Eingangssequenz, Endsequenz und die dazwischen liegenden Einzelsequenzen können beispielsweise Teil eines virtuellen Spiels, eines Films oder dergleichen sein.

Enthält die zurückzulegende Fahrstrecke beispielsweise gerade Streckenabschnitte, auf denen das Kraftfahrzeug wenig bis gar nicht beschleunigt, so können für diese Streckenabschnitte passende Einzelsequenzen ausgewählt werden. Bei diesen Einzelsequenzen kann es beispielsweise vorgesehen sein, dass der Fahrzeuginsasse innerhalb dieser Einzelsequenzen ebenfalls nur ruhige oder kaum virtuelle Bewegungen vornimmt. Enthält die Fahrstrecke beispielsweise Streckenabschnitte, welche sehr kurvig sind, so können dementsprechende Einzelsequenzen ausgewählt und mittels der Anzeigeeinrichtung abgespielt werden. In diesen Einzelsequenzen bewegt sich dann der Fahrzeuginsasse innerhalb einer virtuellen Umgebung beispielsweise relativ schnell nach links und rechts oder dergleichen. Neben der Berücksichtigung der Streckencharakteristik findet auch das Kriterium Berücksichtigung, dass die Aneinanderreihung der Einzelsequenzen in ihrer chronologischen Reihenfolge auch inhaltlich zueinander passt. Die auf die jeweilige Charakteristik einzelner Streckenabschnitte passenden Einzelsequenzen sorgen also für eine sehr realistisch anmutende virtuelle Erfahrung, da virtuelle Bewegungen innerhalb der Einzelsequenzen zur realen Fahrzeugbewegungen passen und zudem die Einzelsequenzen inhaltlich aufeinander abgestimmt aufeinander folgen.

Insgesamt wird mittels des erfindungsgemäßen Verfahrens einem Fahrzeuginsassen beim Zurücklegen einer Fahrstrecke mit dem Kraftfahrzeug die Möglichkeit geboten, eine besonders realistisch anmutende und schlüssige Aneinanderreihung von virtuellen Einzelsequenzen konsumieren zu können.

Die Erfindung sieht vor, dass für den Fahrzeuginsassen früher schon einmal wiedergegebene Einzelsequenzen nicht erneut ausgewählt werden. Im Zuge des Verfahrens ist es also möglich, dass sich gemerkt wird, welche Einzelsequenzen bereits schon einmal wiedergegeben beziehungsweise verwendet wurden. Um eine gewisse Varianz zu erzeugen und Wiederholungen innerhalb eines Erlebnisses zu vermeiden, können die früher schon einmal wiedergegebenen Einzelsequenzen bei einer erneuten Fahrt ausgespart werden. Zum Beispiel kann auch automatisch mittels eines Zählers gezählt werden, wie viele Fahrten der Fahrzeuginsasse seit der Verwendung einer ganz bestimmten Einzelsequenz unternommen hat. Überschreitet der Zähler einen vorgegebenen Wert, wird die betreffende Einzelsequenz zur erneuten Verwendung freigegeben. Es ist auch möglich, dass mittels einer Timers automatisch nachgehalten wird, wie viel Zeit seit der Verwendung einer ganz bestimmten Einzelsequenz verstrichen ist. Überschreitet der Timer einen vorgegebenen Wert, wird die betreffende Einzelsequenz zur erneuten Verwendung freigegeben.

Eine weitere vorteilhafte Ausführungsform der Erfindung sieht vor, dass für dieselbe Fahrstrecke früher schon einmal wiedergegebene Einzelsequenzen nicht erneut ausgewählt werden. So ist es auch möglich, fahrstreckenabhängig Wiederholungen von Einzelsequenzen zu vermeiden, infolgedessen auch für diese ganz bestimmte Fahrstrecken Wiederholungen in Bezug auf die Einzelsequenzen vermieden werden können.

Gemäß einer weiteren vorteilhaften Ausführungsform der Erfindung ist es vorgesehen, dass dem Fahrzeuginsassen mehrere unterschiedliche virtuelle Erlebnisse angeboten werden, wobei die Eingangssequenz und Endsequenz passend zu einem der vom Fahrzeuginsassen ausgewählten virtuellen Erlebnisse vorgegeben werden. So kann der Fahrzeuginsasse nach Belieben aus den unterschiedlichen virtuellen Erlebnissen wählen, wobei seine Auswahl die Eingangssequenz und Endsequenz vorgibt, welche die Aneinanderreihung der virtuellen Einzelsequenzen entsprechend einrahmt beziehungsweise einbettet. Vorzugsweise werden die virtuellen Erlebnisse passend zur Charakteristik der Fahrstrecke angeboten. Dies ist insbesondere dann sinnvoll, wenn die gesamte Fahrstrecke im Vorfeld der Fahrt schon bekannt ist. So können nur diejenigen virtuellen Erlebnisse angeboten werden, welche auch zur Charakteristik der Fahrstrecke, beispielsweise im Hinblick auf ein Höhenprofil, Kurvenprofil oder Dauer der Fahrstrecke passen, angeboten werden. Dies begünstigt eine besonders realistische Wiedergabe und ein besonders realistisches Erleben der betreffenden virtuellen Erlebnisse während des Zurücklegens der Fahrstrecke.

Eine weitere vorteilhafte Ausführungsform der Erfindung sieht vor, dass überwacht wird, ob der Fahrzeuginsasse die Wiedergabe der Einzelsequenzen abbricht, wobei dies bei einer erneuten Auswahl der Einzelsequenzen bei einer späteren Fahrt berücksichtigt wird. Insbesondere bei einer Vielzahl von durchgeführten Fahrten können so beispielsweise Abbruchraten bestimmt und bei der erneuten Auswahl der Einzelsequenzen genutzt werden. Mit anderen Worten ist es also möglich, dass ein Fahrzeuginsasse oder auch anderen Fahrzeuginsassen dahingehend überwacht werden, ob diese die jeweils wiedergegebenen virtuellen Erlebnisse abbrechen. Insbesondere kann dabei auch berücksichtigt werden, ob ganz bestimmte ausgewählte Einzelsequenzen zu einem Abbruch führen. Dadurch kann das Anbieten und Widergeben der Einzelsequenzen fortlaufend an die Vorlieben des Fahrzeuginsassen oder auch an Vorlieben weiterer Fahrzeuginsassen angepasst werden.

In weiterer vorteilhafter Ausgestaltung der Erfindung ist es vorgesehen, dass eine Abfrage erfolgt, wie dem Fahrzeuginsassen die Wiedergabe der Einzelsequenzen gefallen hat, wobei in Abhängigkeit von einer diesbezüglichen Bewertung des Fahrzeuginsassen eine zukünftige Auswahl der Einzelsequenzen erfolgt. Es ist also auch ein direktes Feedback des Fahrzeuginsasse oder auch weiterer Fahrzeuginsassen möglich, wobei das Feedback, also die Bewertung des Fahrzeuginsassen, in die zukünftige Auswahl der Einzelsequenzen einfließt. Dadurch kann die Bereitstellung und Wiedergabe von virtuellen Erlebnissen während der Fahrt mit dem Kraftfahrzeug sukzessive an die Vorlieben des Fahrzeuginsassen oder auch an weitere Fahrzeuginsassen angepasst und verbessert werden.

Eine weitere vorteilhaften Ausführungsform der Erfindung sieht vor, dass eine Abfrage erfolgt, wie dem Fahrzeuginsassen die Wiedergabereihenfolge der Einzelsequenzen gefallen hat, wobei in Abhängigkeit von einer diesbezüglichen Bewertung des Fahrzeuginsassen eine zukünftige Festlegung einer Wiedergabereihenfolge der Einzelsequenzen erfolgt. Beispielsweise ist es denkbar, dass dem Fahrzeuginsassen an sich die ausgewählten Einzelsequenzen gefallen haben, er jedoch die chronologische Aneinanderreihung der ausgewählten Einzelsequenzen nicht optimal fand. So ist es möglich, dass der Fahrzeuginsasse eine Bewertung abgeben und/oder Vorschläge machen kann, um zukünftige Wiedergabereihenfolge entsprechend seiner Vorlieben anzupassen.

Eine weitere vorteilhafte Ausführungsform der Erfindung sieht vor, dass Daten bezüglich eines Höhenprofils, eines Kurvenprofils, der Art von Straßentypen und/oder einer Fahrdauer für die Fahrstrecke bereitgestellt und basierend darauf auf die Charakteristik der Fahrstrecke geschlossen wird. Dies kann sowohl vor Fahrtantritt der Fahrstrecke als auch kontinuierlich während der Befahrung der Fahrstrecke erfolgen. Die Daten können beispielsweise mittels eines Navigationssystems des Kraftfahrzeugs, mittels Sensoren des Kraftfahrzeugs, mittels Sensoren der Anzeigeeinrichtung, mittels Sensoren eines Smartphones und dergleichen im Vorfeld der Fahrstrecke und/oder kontinuierlich beim Befahren der Fahrstrecke bereitgestellt werden. So ist es möglich, die Charakteristik der Fahrstrecke sowohl vorab als auch während dem Befahren der Fahrstrecke besonders exakt zu bestimmen, um jeweilige virtuelle Erlebnisse besonders gut daran anpassen zu können.

Das erfindungsgemäße Anzeigesystem für ein Kraftfahrzeug umfasst eine Anzeigeeinrichtung und eine Steuereinrichtung zum Durchführen des erfindungsgemäßen Verfahrens oder einer vorteilhaften Ausführungsform des erfindungsgemäßen Verfahrens.

Die Anzeigeeinrichtung kann eine Virtual-Reality-Brille, eine Augmented-Reality-Brille, eine Mixed-Reality-Brille oder eine in eine Fensterscheibe des Kraftfahrzeugs integrierte Anzeigeeinrichtung sein. Im Falle der Virtual-Reality-Brille wird der Fahrzeuginsasse visuell von der realen Umgebung abgeschottet. Im Falle der Augmented-Reality-Brille, der Mixed-Reality-Brille oder der in die Fensterscheibe des Kraftfahrzeugs integrierten Anzeigeeinrichtung hingegen nimmt der Fahrzeuginsasse seine reale Umgebung visuell noch wahr. Allerdings wird die reale Umgebung mittels der Anzeigeeinrichtung mit der Eingangssequenz und Endsequenz sowie mit den virtuellen Einzelsequenzen überlagert. Einzelne virtuelle Elemente überlagern beziehungsweise augmentieren also die Realität.

Vorteilhafte Ausgestaltungen des erfindungsgemäßen Anzeigesystems sind als vorteilhafte Ausgestaltungen des erfindungsgemäßen Verfahrens und umgekehrt anzusehen, wobei das Anzeigesystem insbesondere Mittel zur Durchführung der Verfahrensschritte aufweist.

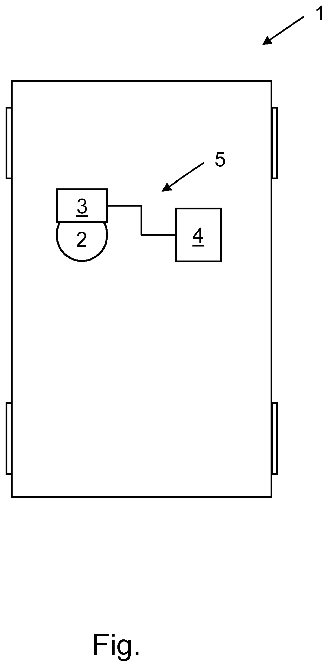

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine stark schematisierte Darstellung eines Kraftfahrzeugs, in dem ein Fahrzeuginsasse sitzt, der eine Virtual-Reality-Brille aufgesetzt hat.

Ein Kraftfahrzeug 1 ist in einer stark schematisierten Darstellung in der einzigen Figur gezeigt. In dem Kraftfahrzeug 1 sitzt ein Fahrzeuginsasse 2, der eine Virtual-Reality-Brille 3 aufgesetzt hat. Zudem ist eine Steuereinrichtung 4 vorgesehen, welche dazu ausgelegt ist, die Virtual-Reality-Brille 3 anzusteuern. Die Virtual-Reality-Brille 3 und die Steuereinrichtung 4 bilden gemeinsam ein Anzeigesystem, im vorliegenden Ausführungsbeispiel ein Virtual-Reality-System 5. Die Steuereinrichtung 4 kann beispielsweise Teil der Virtual-Reality-Brille 3 sein. Alternativ ist es auch möglich, dass die Steuereinrichtung 4 beispielsweise fahrzeugseitig verbaut ist, wobei ein Datenaustausch zwischen Virtual-Reality-Brille 3 und Steuereinrichtung 4 in dem Fall vorzugsweise drahtlos erfolgen kann.

Nachfolgend wird ein Verfahren zum Betreiben der Virtual-Reality-Brille 3 beim Zurücklegen einer Fahrstrecke mit dem Kraftfahrzeug 1 näher erläutert. Es werden mehrere virtuelle Einzelsequenzen bereitgestellt, die mittels der Virtual-Reality-Brille 3 wiedergegeben werden können. Bei den Einzelsequenzen kann es sich beispielsweise um einzelne Module oder Bestandteile eines virtuellen Spiels, Films, einer virtuellen Sightseeing-Tour oder dergleichen handeln. Bei den Einzelsequenzen kann es sich prinzipiell um beliebige virtuelle Unterhaltungsformate handeln, welche mittels der Virtual-Reality-Brille 3 wiedergegeben werden können.

Beim Zurücklegen der Fahrstrecke werden einige der bereitgestellten Einzelsequenzen mittels der Virtual-Reality-Brille 3 wiedergegeben. Eine Auswahl der Einzelsequenzen und eine Festlegung einer Wiedergabereihenfolge bezüglich der ausgewählten Einzelsequenzen erfolgt dabei passend zu einer Charakteristik der Fahrstrecke, die mit dem Kraftfahrzeug 1 zurückgelegt wird. Die Auswahl der Einzelsequenzen und die Festlegung der Wiedergabereihenfolge der Einzelsequenzen erfolgt zudem derart, dass die Einzelsequenzen eine vorgegebene Eingangssequenz und Endsequenz zu einem schlüssigen virtuellen Erlebnis miteinander verbinden. Dies bedeutet, dass mittels der Eingangssequenz und der Endsequenz eine in sich schlüssige Story aufgebaut wird. Beispielsweise soll der Fahrzeuginsasse 2 innerhalb einer bestimmten Zeit virtuell von einem Punkt A zu einem Punkt B kommen oder innerhalb von einer bestimmten Zeit ein virtuelles Objekt von Punkt A zu Punkt B bringen. Die einzelnen virtuellen Einzelsequenzen verbinden dabei die Eingangssequenz und die Endsequenz zu einem schlüssigen virtuellen Erlebnis für den Fahrzeuginsassen 2, also zu einer schlüssigen Geschichte, die der Fahrzeuginsasse 2 erlebt.

Die Einzelsequenzen werden dabei angepasst an die Charakteristik der Fahrstrecke ausgewählt und die Wiedergabereihenfolge der Einzelsequenzen ebenfalls entsprechend der Charakteristik der Fahrstrecke vorgegeben. Zudem werden die Einzelsequenzen derart aneinander gereiht, dass diese in ihrer Chronologie zueinander passen und die Eingangssequenz und die Endsequenz dadurch zu einem schlüssigen Erlebnis miteinander verbinden.

Das Virtual-Reality-System 5 kann sich dabei merken, welche der Einzelsequenzen bereits schon einmal verwendet worden sind. Um eine gewisse Varianz zu erzeugen und Wiederholungen innerhalb eines virtuellen Erlebnisses zu vermeiden, kann es dabei vorgesehen sein, dass früher schon einmal wiedergegebene Einzelsequenzen nicht erneut ausgewählt werden. Für dieselbe Fahrstrecke früher schon einmal wiedergegebene Einzelsequenzen können ebenfalls herausgefiltert werden, sodass diese nicht erneut ausgewählt werden.

Vor dem Fahrtantritt der Fahrstrecke kann es auch vorgesehen sein, dass einem Fahrzeuginsassen zwei oder mehrere unterschiedliche virtuelle Erlebnisse angeboten werden, aus denen er wählen kann. Diese Auswahlmöglichkeit kann beispielsweise über die Virtual-Reality-Brille 3 angezeigt werden. Die besagte Eingangssequenz und Endsequenz wird dabei passend zu einem der vom Fahrzeuginsassen 2 ausgewählten Erlebnisse vorgegeben. Die virtuellen Erlebnisse selbst können passend zur Charakteristik der Fahrstrecke angeboten werden. Sofern die Fahrstrecke schon vollständig bekannt sein sollte, kann die Auswahl der virtuellen Erlebnisse also passend zur Charakteristik der Fahrstrecke eingeschränkt werden.

Zudem kann es vorgesehen sein, dass überwacht wird, ob der Fahrzeuginsasse 2 die Wiedergabe der Einzelsequenzen abbricht. Dies kann bei einer erneuten Auswahl der Eingangssequenzen bei einer späteren Fahrt berücksichtigt werden. Auch kann eine Abfrage erfolgen, wie dem Fahrzeuginsassen 2 die Wiedergabe der Einzelsequenzen gefallen hat. In Abhängigkeit von einer diesbezüglichen Bewertung des Fahrzeuginsassen 2 kann dann eine zukünftige Auswahl der Einzelsequenzen passend zur Bewertung und somit zu den jeweiligen Präferenzen des Fahrzeuginsassen 2 erfolgen. Auch ist es möglich, dass eine Abfrage erfolgt, wie dem Fahrzeuginsassen 2 die Wiedergabereihenfolge der Einzelsequenzen gefallen hat. Eine diesbezügliche Bewertung kann bei einer späteren Zusammenstellung der Wiedergabereihenfolge berücksichtigt werden.

Daten bezüglich eines Höhenprofils, eines Kurvenprofils, der Art von Straßentypen und/oder einer Fahrtdauer für die Fahrstrecke können sowohl fahrzeugseitig als auch mittels der Virtual-Reality-Brille 3 bereitgestellt werden, wobei basierend darauf auf die Charakteristik der Fahrstrecke geschlossen wird. Auch ist es beispielsweise möglich, dass mittels eines hier nicht dargestellten Smartphones, welches der Fahrzeuginsasse 2 mit sich führt, die Charakteristik der Fahrstrecke beschreibende Daten bereitgestellt werden. Ist vor Fahrtantritt beispielsweise schon bekannt, wohin der Fahrzeuginsasse 2 gefahren werden möchte, wobei infolgedessen beispielsweise auch schon die genaue Fahrstrecke bekannt sein kann, so ist es möglich, die Charakteristik der Fahrstrecke vollständig im Vorfeld zu bestimmen und die Auswahl und Festlegung der Wiedergabereihenfolge der Einzelsequenzen vollständig vorher, also vor Fahrtantritt, passend zur Charakteristik der Fahrstrecke anzupassen. Es ist aber auch möglich, dass die Charakteristik der Fahrstrecke dynamisch beim Zurücklegen der Fahrstrecke ermittelt wird. In dem Fall kann auch eine dynamische Anpassung der Auswahl der Wiedergabereihenfolge der Einzelsequenzen erfolgen, immer auch derart, dass die Einzelsequenzen die vorgegebene Eingangssequenz und Endsequenz zu einem schlüssigen Erlebnis miteinander verbinden.

Mittels des erläuterten Verfahrens und Virtual-Reality-Systems 5 ist es also möglich, dass der Fahrzeuginsasse 2 beim Befahren unterschiedlichster Fahrstrecken jeweilige virtuelle Erlebnisse bereitgestellt bekommt, die zur jeweiligen Charakteristik der Fahrstrecke passen. Reale Bewegungen der Kraftfahrzeugs können so besonders realistisch anmutend in virtuelle Umgebungen der jeweiligen Einzelsequenzen eingebettet werden, wobei die Einzelsequenzen zudem die Eingangssequenz und die Endsequenz zu einem schlüssigen Erlebnis verbinden.

Das erläuterte Ausführungsbeispiel ist auch auf Anzeigesysteme für Kraftfahrzeugs übertragbar, welche statt der Virtual-Reality-Brille (3) anderweitige Anzeigeeinrichtungen aufweisen können, z.B. Anzeigeeinrichtungen in Form einer Augmented-Reality-Brille, einer Mixed-Reality-Brille oder eine in eine Fensterscheibe des Kraftfahrzeugs integrierte Anzeigeeinrichtung. Bei letzterem kann es sich um eine kontaktanaloge Anzeigeeinrichtung handeln, welche in die Fensterscheibe, z.B. eine Seitenscheibe oder Windschutzscheibe, integriert ist. Es kann sich also um ein Augmented Window des betreffenden Kraftfahrzeugs handeln.

## Patentansprüche

1. Verfahren zum Betreiben einer Anzeigeeinrichtung (3) in einem Kraftfahrzeug (1) beim Zurücklegen einer Fahrstrecke mit dem Kraftfahrzeug (1), umfassend die Schritte:
- Bereitstellen mehrerer virtueller Einzelsequenzen, welche mittels der Anzeigeeinrichtung (3) wiedergegeben werden können;
- Wiedergeben von zumindest einem Teil der bereitgestellten Einzelsequenzen mittels des Anzeigeeinrichtung (3) beim Zurücklegen der Fahrstrecke mit dem Kraftfahrzeug (1), wobei eine Auswahl und Festlegung einer Wiedergabereihenfolge der Einzelsequenzen passend zu einer Charakteristik der Fahrstrecke und derart erfolgt, dass die Einzelsequenzen eine vorgegebene Eingangssequenz und Endsequenz zu einem schlüssigen Erlebnis verbinden.

2. Verfahren nach Anspruch 1,
**dadurch gekennzeichnet, dass**
für den Fahrzeuginsassen (2) früher schon einmal wiedergegebene Einzelsequenzen nicht erneut ausgewählt werden.

3. Verfahren nach Anspruch 1 oder 2,
**dadurch gekennzeichnet, dass**
für dieselbe Fahrstrecke früher schon einmal wiedergegebene Einzelsequenzen nicht erneut ausgewählt werden.

4. Verfahren nach einem der vorhergehenden Ansprüche,
**dadurch gekennzeichnet, dass**
dem Fahrzeuginsassen (2) mehrere unterschiedliche virtuelle Erlebnisse angeboten werden, wobei die Eingangssequenz und Endsequenz passend zu einem der vom Fahrzeuginsassen (2) ausgewählten virtuellen Erlebnisse vorgegeben werden.

5. Verfahren nach Anspruch 4,
**dadurch gekennzeichnet, dass**
die virtuellen Erlebnisse passend zur Charakteristik der Fahrstrecke angeboten werden.

6. Verfahren nach einem der vorhergehenden Ansprüche,
**dadurch gekennzeichnet, dass**
überwacht wird, ob der Fahrzeuginsasse (2) die Wiedergabe der Einzelsequenzen abbricht, wobei dies bei einer erneuten Auswahl der Einzelsequenzen bei einer späteren Fahrt berücksichtigt wird.

7. Verfahren nach einem der vorhergehenden Ansprüche,
**dadurch gekennzeichnet, dass**
eine Abfrage erfolgt, wie dem Fahrzeuginsassen (2) die Wiedergabe der Einzelsequenzen gefallen hat, wobei in Abhängigkeit von einer diesbezüglichen Bewertung des Fahrzeuginsassen (2) eine zukünftige Auswahl der Einzelsequenzen erfolgt.

8. Verfahren nach einem der vorhergehenden Ansprüche,
**dadurch gekennzeichnet, dass**
eine Abfrage erfolgt, wie dem Fahrzeuginsassen (2) die Wiedergabereihenfolge der Einzelsequenzen gefallen hat, wobei in Abhängigkeit von einer diesbezüglichen Bewertung des Fahrzeuginsassen (2) eine zukünftige Festlegung einer Wiedergabereihenfolge der Einzelsequenzen erfolgt.

9. Verfahren nach einem der vorhergehenden Ansprüche,
**dadurch gekennzeichnet, dass**
Daten bezüglich eines Höhenprofils, eines Kurvenprofils, der Art von Straßentypen und/oder einer Fahrdauer für die Fahrstrecke bereitgestellt und basierend darauf auf die Charakteristik der Fahrstrecke geschlossen wird.

10. Anzeigesystem (5) für ein Kraftfahrzeug (1), umfassend eine Anzeigeeinrichtung (3) und eine Steuereinrichtung (4) zum Durchführen eines Verfahrens nach einem der vorhergehenden Ansprüche.

11. Anzeigesystem (5) nach Anspruch 10,
**dadurch gekennzeichnet, dass**
die Anzeigeeinrichtung (3) eine Virtual-Reality-Brille, eine Augmented-Reality-Brille, eine Mixed-Reality-Brille eine in eine Fensterscheibe des Kraftfahrzeugs integrierte Anzeigeeinrichtung ist.

## Claims

1. Method for operating a display device (3) in a motor vehicle (1) when travelling on a driving route with the motor vehicle (1), comprising the steps:
- providing several virtual individual sequences which can be portrayed by means of the display device (3);
- portraying at least some of the provided individual sequences by means of the display device (3) when travelling on the driving route with the motor vehicle (1), wherein a selection and determination of a portrayal sequence of the individual sequences takes place in a manner which is suitable with regard to a characteristic of the driving route and such that the individual sequences connect a predetermined initial sequence and end sequence to form a coherent experience.

2. Method according to claim 1,
**characterised in that**
individual sequences which have already been portrayed once for the vehicle occupant (2) are not selected again.

3. Method according to claim 1 or 2,
**characterised in that**
individual sequences which have already been portrayed once for the same driving route are not selected again.

4. Method according to any of the preceding claims,
**characterised in that**
several different virtual experiences are offered to the vehicle occupant (2), wherein the initial sequence and end sequence are predetermined which are suitable with respect to one of the virtual experiences selected by the vehicle occupant (2).

5. Method according to claim 4,
**characterised in that**
the virtual experiences are offered in a manner which is suitable with regard to the characteristic of the driving route.

6. Method according to any of the preceding claims,
**characterised in that**
it is monitored whether the vehicle occupant (2) terminates the portrayal of the individual sequences, wherein this is taken into consideration in the case of a renewed selection of the individual sequences during a later journey.

7. Method according to any of the preceding claims,
**characterised in that**
the vehicle occupant (2) is asked how they enjoyed the portrayal of the individual sequences, wherein a future selection of the individual sequences takes place as a function of an evaluation in this regard on the part of the vehicle occupant (2).

8. Method according to any of the preceding claims,
**characterised in that**
the vehicle occupant (2) is asked how they enjoyed the portrayal sequence of the individual sequences, wherein a future determining of a portrayal sequence of the individual sequences takes place as a function of an evaluation in this regard on the part of the vehicle occupant (2).

9. Method according to any of the preceding claims,
**characterised in that**
data with regard to an elevation profile, a curve profile, the sort of road types and/or a journey duration for the driving route is provided and, on the basis thereof, conclusions are drawn with regard to the characteristic of the driving route.

10. Display system (5) for a motor vehicle (1) comprising a display device (3) and a control apparatus (4) for carrying out a method according to any of the preceding claims.

11. Display system (5) according to claim 10,
**characterised in that**
the display device (3) is a pair of virtual reality glasses, a pair of augmented reality glasses, a pair of mixed reality glasses or a display apparatus integrated in a window pane of the motor vehicle.

## Revendications

1. Procédé permettant de faire fonctionner un dispositif d'affichage (3) dans un véhicule à moteur (1) lors du parcours d'un trajet avec le véhicule à moteur (1), comprenant les étapes consistant à :
- fournir plusieurs séquences virtuelles individuelles, lesquelles peuvent être reproduites au moyen du dispositif d'affichage (3) ;
- reproduire au moins une partie des séquences individuelles fournies au moyen du dispositif d'affichage (3) lors du parcours du trajet avec le véhicule à moteur (1), dans lequel une sélection et définition d'un ordre de reproduction des séquences individuelles est effectuée en accord avec une caractéristique du trajet et de telle façon que les séquences individuelles connectent une séquence d'entrée et une séquence de fin prédéfinies en une expérience cohérente.

2. Procédé selon la revendication 1,
**caractérisé en ce que**
les séquences individuelles déjà reproduites auparavant pour l'occupant de véhicule (2) ne sont pas sélectionnées à nouveau.

3. Procédé selon la revendication 1 ou 2,
**caractérisé en ce que**
les séquences individuelles déjà reproduites auparavant pour le même trajet ne sont pas sélectionnées à nouveau.

4. Procédé selon l'une quelconque des revendications précédentes,
**caractérisé en ce que**
plusieurs expériences virtuelles différentes sont proposées à l'occupant de véhicule (2), dans lequel la séquence d'entrée et la séquence de fin sont prédéfinies en accord avec l'une des expériences virtuelles sélectionnées par l'occupant de véhicule (2).

5. Procédé selon la revendication 4,
**caractérisé en ce que**
les expériences virtuelles sont proposées en accord avec la caractéristique du trajet.

6. Procédé selon l'une quelconque des revendications précédentes,
**caractérisé en ce que**
il est surveillé si l'occupant de véhicule (2) interrompt la reproduction des séquences individuelles, dans lequel il est tenu compte de cela lors d'une nouvelle sélection des séquences individuelles pour un trajet ultérieur.

7. Procédé selon l'une quelconque des revendications précédentes,
**caractérisé en ce que**
une interrogation a lieu pour savoir comment l'occupant de véhicule (2) a apprécié la reproduction des séquences individuelles, dans lequel une sélection future des séquences individuelles a lieu en fonction d'une évaluation de l'occupant de véhicule (2) à ce sujet.

8. Procédé selon l'une quelconque des revendications précédentes,
**caractérisé en ce que**
une interrogation a lieu pour savoir comment l'occupant de véhicule (2) a apprécié l'ordre de reproduction des séquences individuelles, dans lequel une détermination future d'un ordre de reproduction des séquences individuelles a lieu en fonction d'une évaluation de l'occupant de véhicule (2) à ce sujet.

9. Procédé selon l'une quelconque des revendications précédentes,
**caractérisé en ce que**
des données relatives à un profil d'altitude, à un profil de virage, au type de route et/ou à une durée de parcours sont fournies pour le trajet et, sur cette base, la caractéristique du trajet est déduite.

10. Système d'affichage (5) pour un véhicule à moteur (1), comprenant un dispositif d'affichage (3) et un appareil de commande (4) pour la mise en œuvre d'un procédé selon l'une quelconque des revendications précédentes.

11. Système d'affichage (5) selon la revendication 10,
**caractérisé en ce que**
le dispositif d'affichage (3) est une paire de lunettes de réalité virtuelle, une paire de lunettes de réalité augmentée, une paire de lunettes de réalité mixte ou un dispositif d'affichage intégré dans une vitre du véhicule à moteur.
